# EUROPEAN PATENT APPLICATION

(11) **EP 1 588 904 A1**
(43) Date of publication of application: **26.10.2005**
(21) Application number: 04101685.8
(22) Date of filing: 22.04.2004
(51) Int. Cl.: B60R 21/01, G01G 19/414, B60N 3/04

(54) **Method for manufacturing a floor carpet including a sensing device for an automotive vehicle**

(71) Applicant: IEE INTERNATIONAL ELECTRONICS & ENGINEERING S.A., 6468 Echternach (LU); DaimlerChrysler AG, 70567 Stuttgart (DE)
(72) Inventor: Federspiel, Laurent, 5366 Munsbach (LU); Meyer, Michael, 71155 Alfdorf (DE)
(74) Representative: Beissel, Jean

(57) **Abstract**

A method for manufacturing a floor carpet structure including a sensing function for an automotive vehicle, comprises the steps of providing an upper carpet laminate with at least one fibrous layer, providing a separate sensing device, and embedding said sensing device into said carpet structure by applying a rear reinforcement structure to a lower surface of said upper carpet laminate.

## Description

### Introduction

The present invention generally relates to a method for fitting a sensing device into a foot compartment of an automotive vehicle.

In order to protect the lives of passengers during a traffic accident, modern vehicles are generally provided with a protection system comprising several airbags and seat belt pretensioners, which are used to absorb the energy of a passenger released during the collision due to the accident. It is clear that such protection systems are most effective when they are well adapted to the specific requirements of an actual seat occupancy. That is why microprocessor-controlled protection systems have been designed which provide several operational modes, allowing for example an adaptation of the instant at which airbags are deployed, the volume to which the airbags are inflated, the instant at which safety belts are released after the collision, etc, as a function of the stature of a passenger on the seat. In order to enable the control microprocessor to select the optimum operational mode for a given seat occupancy status, it is of course necessary to detect one or several parameters characterizing the occupancy status of the seat and to classify the occupancy into one of several classes, each of which is associated to a specific operational mode of the restraint system.

One approach for gathering relevant parameters of a seat occupancy is based on the detection of the capacitive coupling of a body to one or several electrodes arranged in the seat. Such a measurement system is for instance described in LU-A-88 828. This measurement system comprises at least one transmitting electrode and at least one receiving electrode that are capacitively coupled by a conductive body. The receiving electrodes are connected to an analysis circuit that determines the capacitive coupling of the transmitting antenna with the conductive body by comparing the measured signal with a reference signal.

Various other systems have been disclosed with electrodes arranged at different locations in the passenger compartment in order to detect the presence and/or the nature of a seat occupancy and to classify the occupancy status in one of several classes. German patent application DE-A-102 35 881 discloses e.g. a combined occupant detection system comprising a first electrode arranged in a seating surface of a vehicle seat and a second electrode arranged in the foot compartment of the vehicle. The combined detection system can further comprise a pressure sensitive mat to be arranged together with the second electrode into the foot compartment.

In modern automotive vehicles, the foot compartment is no longer simply composed by a metal sheet covered with a simple carpet layer. The foot compartment has rather become a sophisticated environment where a number of technical components of the vehicle, like e.g. air conditioning tubes, cables, noise absorbers, etc., are integrated and covered by a three-dimensionally formed carpet structure. The vehicle carpet structure itself has to fulfil a number of functions such as providing noise absorption, water resistance, flame protection etc. For this reason, the vehicle carpet is typically manufactured by providing an upper, three-dimensionally moulded carpet laminate with a rear reinforcement structure of a synthetic foam material, whereby the reinforcement structure is shaped so as to conform to the vehicle shell contour and the technical components arranged thereon.

It is clear that the integration of further sensing devices into such an environment has to meet a number of requirements, especially if the sensing device itself should be protected against outer environmental influences and high mechanical stress. A solution must thus be found to introduce a large surface sensor device into the foot compartment.

French patent application FR-A-2 595 441 discloses a security device comprising a carpet, which is configured as a contact sensor for delivering an electrical signal in response to pressure acting on the carpet. The carpet is made of a soft felt material, wherein at least a part of the fibres forming the felt material are made of electrically conducting material. It will be clear that this solution is not suitable for meeting the above-mentioned requirements.

### Object of the invention

The object of the present invention is accordingly to provide an improved method for integrating a sensing device into the carpet structure of a vehicle foot compartment.

### General description of the invention

This object is achieved by a method for manufacturing a floor carpet structure including a sensing function for an automotive vehicle according to claim 1. This method for manufacturing a floor carpet structure including a sensing function for an automotive vehicle, comprises the steps of providing an upper carpet laminate, said carpet laminate comprising at least one fibrous layer; providing a separate sensing device; and embedding said sensing device into said carpet structure by applying a rear reinforcement structure to a lower surface of said upper carpet laminate. According to the present invention, a separately provided sensing device is securely embedded within the carpet structure. As a result, the sensing device is protected by the different layers of the carpet structure from all kinds of outside environmental conditions such as moisture and the like and effectively electrically isolated from the vehicle body. Furthermore, the upper carpet laminate, which is usually made of several layers providing a high mechanical resistance and shock absorption, reduces the mechanical stress acting on the sensing device and prevents the sensing device from being destroyed due to very high localized loads such as the load exerted by stiletto heels or the like. The method of the present invention accordingly secures the sensing device in a location, which offers best protection against all kinds of environmental influences.

Furthermore, the embedding of the sensing device into the carpet structure advantageously geometrically secures the sensing device to its operating position inside the carpet structure and thus prevents the sensing device from being displaced once the reinforcement structure is applied. As a result, no further undesired sensor dislocation is possible and accordingly no additional position adjustment will be required.

In a first embodiment of the invention, the sensing device is foamed into the reinforcement structure itself. In this embodiment, the step of embedding includes the steps of arranging said sensing device at a certain distance below said lower surface of said upper carpet laminate and foaming said reinforcement structure onto said lower surface, thereby embedding said sensing device into said reinforcement structure. However in a preferred embodiment, the sensing device should be embedded into the carpet structure between the upper carpet laminate and the rear reinforcement structure. In this embodiment, the step of embedding comprises the steps of securing the sensing element to said lower surface of said upper carpet laminate, and applying said a rear reinforcement structure to said lower surface of said upper carpet laminate and said sensing device secured onto said lower surface. The latter embodiment does not require sophisticated supporting means for arranging the sensing device at a certain distance below the upper carpet laminate. Instead, the sensing device is simply fastened directly to the lower surface of the upper carpet laminate by any possible means. The sensing device may e.g. be adhesively bonded by means of adhesive tape or mechanically by some sort of Velcro fasteners. Alternatively the sending device could be fastened using magnetic or electrostatic attraction or by mechanical fitting means.

The rear reinforcement structure may be adhesively bonded to the upper carpet laminate. However in a preferred embodiment, the rear reinforcement structure is directly formed onto the lower surface of the upper carpet laminate by a foaming process. This means that the step of applying said a rear reinforcement structure to said lower surface of said upper carpet laminate comprises the step of foaming said reinforcement structure onto said lower surface. The foaming process is well suited for securely integrating and positioning the sensing device into the carpet structure at low costs and meets all the requirements for high volume production.

It will be appreciated, that the foaming process also enables an easy integration of an electrical connection line for connecting the sensing element to a control unit. The connection line may simply be foamed into the reinforcement structure so as to exit on a lateral or lower surface thereof. The connection line may also be arranged inside plastic film container, which extends to a lateral or lower surface of the reinforcement structure. This plastic film container may then be opened the foaming process so as to give access to the connection line.

It will be noted that the upper carpet laminate preferably comprises at least one heavy layer and/or at least one felt layer bonded to said fibrous layer for improving the laminates shock and noise absorbing properties. These different layers are preferably laminated together prior to securing said sensing device onto said carpet laminate.

The upper carpet laminate is preferably moulded into a three-dimensional structure prior to the application of said a rear reinforcement structure. This provides the advantage that the carpet structure does not require further extensive forming after the integration of the sensing device, which avoids that the and accordingly the sensing device will not be subjected to later mechanical bending stress.

It will be appreciated that the present invention proposes a method which is suitable for the integration of various types of sensing devices in the carpet structure of a vehicle. Possible embodiments of such a sensing device includes a pressure sensing mats, such as a foil-type pressure sensing mat made of force sensing resistors, or a sheet electrode of a metal foil or conductive (woven or non-woven) textile for capacitive sensing systems.

### Detailed description with respect to the figures

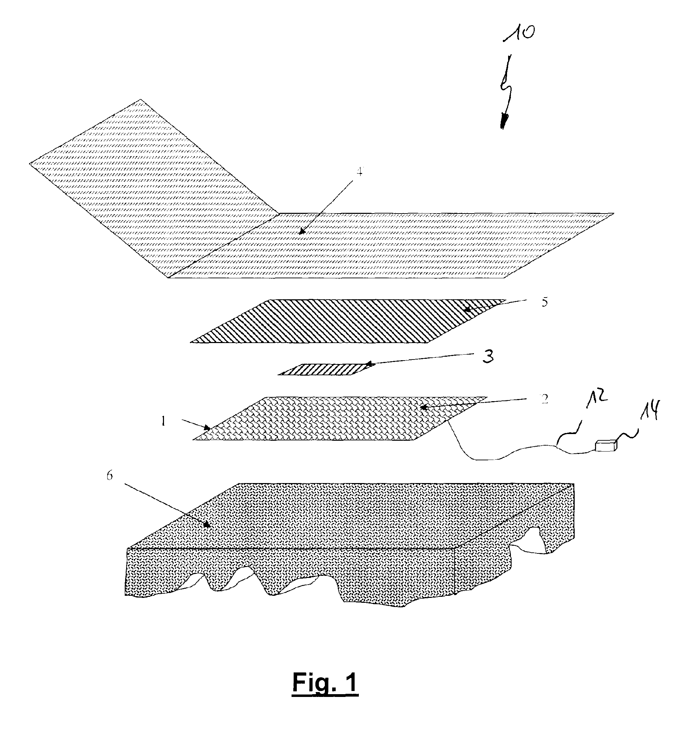

The present invention will be more apparent from the following description of a not limiting embodiment with reference to the attached fig. 1, which illustrates the different elements of a carpet structure with integrated sensing device.

The carpet structure 10 shown in fig. 1 generally comprises a fibrous layer 4 and a heavy layer 5 laminated together to form an upper carpet laminate. The fibrous layer comprises e.g. a number of fibres or yarn tufts anchored in a suitable backing material. The heavy layer may be manufactured of a fleece, non-woven of felt layer and mostly serves as a noise absorber. The upper carpet laminate is e.g. manufactured in a stamping process, where the heavy layer 5 is melted to the fibrous layer 4 and the so formed laminate is subsequently moulded into its final 3D geometry.

A sensing device 1, e.g. a capacitive electrode made of any suitable conductive sheet material 2 is then secured to the lower surface of the upper carpet laminate e.g. by means of an adhesive tape or Velcro fasteners or the like 3. The sensing device comprises a connection line 12 for connecting the sensing device 1 to an external control unit 14. The connection line 12 may also be fastened to the upper carpet laminate, e.g. inside a plastic foil container.

Once the sensing device is arranged at the predetermined location, a rear reinforcing structure 6 is applied onto the rear surface of the upper carpet laminate by a foaming process. The reinforcement structure thus tightly encases the sensing device 1 so that the sensing device 1 will be integrated in an entirely protected location. It will be noted that the lower surface of said rei n-forcement structure is shaped so as to conform to a vehicle shell contour and possibly to technical components arranged thereon.

### List of reference numerals

- 1: sensing device
- 2: conductive sheet material
- 3: fasteners for sensor
- 4: fibrous layer
- 5: heavy layer
- 6: reinforcing structure
- 10: carpet structure
- 12: connection line
- 14: external control unit

## Claims

1. Method for manufacturing a floor carpet structure including a sensing function for an automotive vehicle, comprising the steps of
providing an upper carpet laminate, said carpet laminate comprising at least one fibrous layer;
providing a separate sensing device; and
embedding said sensing device into said carpet structure by applying a rear reinforcement structure to a lower surface of said upper carpet laminate.

2. Method according to claim 1, wherein said step of embedding includes the steps of arranging said sensing device below said lower surface of said upper carpet laminate and foaming said reinforcement structure onto said lower surface, thereby embedding said sensing device into said reinforcement structure.

3. Method according to claim 1, wherein said step of embedding comprises the steps of securing the sensing element to said lower surface of said upper carpet laminate, and applying said a rear reinforcement structure to said lower surface of said upper carpet laminate and said sensing device secured onto said lower surface.

4. Method according to any one of claims 1 to 3, wherein said step of applying said a rear reinforcement structure to said lower surface of said upper carpet laminate comprises the step of foaming said reinforcement structure onto said lower surface.

5. Method according to any one of claims 1 to 4, wherein said upper carpet laminate comprises at least one heavy layer and/or at least one felt layer bonded to said fibrous layer.

6. Method according to any one of claims 1 to 5, wherein said upper carpet laminate is moulded into a three-dimensional structure prior to the application of said a rear reinforcement structure.

7. Method according to any one of claims 1 to 6, wherein said sensing device comprises a pressure sensing mat.

8. Method according to any one of claims 1 to 7, wherein said sensing device comprises a sheet electrode.
